# EUROPÄISCHE PATENTSCHRIFT

(11) **EP 2 671 974 B1**
(45) Veröffentlichungstag und Bekanntmachung des Hinweises auf die Patenterteilung: **15.02.2017**
(21) Anmeldenummer: 13002781.6
(22) Anmeldetag: 29.05.2013
(51) Int. Cl.: C25B 13/02, C25B 1/13, H01M 8/10, H01M 8/18, H01M 8/1065, H01M 8/1018, C25B 9/10

(54) **Reinwasser-Versorgungssystem für Dialysegeräte**
Pure water supply system for dialysis devices
Système d'alimentation en eau pure pour les appareils de dialyse

(30) Priorität: 06.06.2012 DE 102012011314
(43) Veröffentlichungstag der Anmeldung: 11.12.2013
(73) Patentinhaber: Fidica GmbH & Co. KG, 63877 Sailauf (DE)
(72) Erfinder: Völker, Manfred, 63825 Blankenbach (DE)
(74) Vertreter: Flosdorff, Jürgen

(56) Entgegenhaltungen:
- EP-A1- 0 159 138
- EP-A1- 1 953 271
- DE-A1- 19 821 985
- DE-A1-102007 042 171
- JP-A- 2003 096 587
- JP-A- 2003 129 266
- US-A- 3 496 091
- US-A- 4 013 537
- US-A- 4 187 165
- US-A- 4 416 747
- US-A1- 2006 016 685
- US-B1- 8 163 142

## Beschreibung

Die Erfindung betrifft den Aufbau eines elektrochemischen Ozonerzeugers, welcher aus Anode, Kathode und dazwischen angeordneter vollflächiger Membran besteht. Dabei kann sowohl eine Zelle mit einer aktiven Doppelkammer, bestehend aus Anoden-Raum und Kathoden-Raum, durch direkte Kontaktierung gebildet werden, und es können auch weitere Schichten durch Einfügen von dazwischen angeordneten leitfähigen Elektrodenschichten als elektrolytisch aktive Schichten mit abgestuften Spannungspotentialen entstehen. Die Zwischenräume werden durch vollflächige Membran-Elemente gebildet, welche nur für Protonen, positiv geladene Wasserstoff-Ionen H⁺ und entsprechende Oxonium-Ionen H₃O⁺, leitfähig sind. Diese Membran-Elemente stellen eine Kationen-leitfähige Verbindung zwischen den Elektroden dar, und sie gewährleisten sehr klare Strömungsverhältnisse. Die Membran-Elemente werden dargestellt durch einen Feststoffelektrolyt mit ausgebildeten Strömungskanälen, welcher als Protonenleiter eine elektrochemische Reaktion fördert.

Die elektrochemische Ozonerzeugung im Wasser beruht auf zwei wesentlichen Faktoren:
1. OH' Überschuss an Anode und H⁺ bzw. H₃O⁺ Mangel
2. Katalytische Oberfläche an Anode, damit O₃ entsteht und nicht O₂ bekannt: Blei-dioxid PbO₂/Bor-Dotierte kristaline Diamant-Schicht BDD/ ...

Dabei wird eine Reaktion stabil aufgebaut, wobei an der Anode Ozon entsteht:

3H₂O -> O₃ + 6H⁺ + 6e⁻

Die Zwischenreaktionen welche an der Anodenoberfläche katalytisch im Verborgenen geschehen, seien hier zum Teil erwähnt:

H₂O -> HO• + H⁺ + e⁻

HO• + -> O• + H⁺ + e⁻...

H₂O + HO• + O• -> O₃ + 3H⁺ + 3e⁻

an der Kathode entsteht Wasserstoff und Zwischenprodukte:

2H⁺ + 2e⁻ -> H₂

2H₂O + 2e⁻ -> H₂ + 2OH⁻

Bei vorhandenen Härtebildnern im Wasser treten auch Härteablagerungen auf.

Bisher bekannte elektrolytische Ozonerzeuger im Reinwasserbereich arbeiten mit porösen Elektroden, oder nicht dichten Elektroden, welche in der Regel als Streckmetalle ausgeführt werden. Diese werden mit der elektrochemisch aktiven Schicht, in der Regel eine CVD chemichal vapor deposition oder PVD physical vapor deposition erzeugte DLC diamant-like-carbon Schicht, welche leitfähig ist, in der Regel BDD Bor-dotierte Diamant-Schicht, mit einem Feststoff-Elektrolyten gegeneinander gespannt. Siehe DE29504323 U1, DE19606606 C2, DE 10025167 B4, DE20318754 U1 und DE102004015680A1.

Als Feststoff-Elektrolyt wird eine kationenleitende chemisch gegen Ozon stabile Membran verwendet, vorzugsweise eine sulfonierte Tetraflourethylen-Membran (PTFE), z.B. von DuPont Nafion PFSA-Membran.

Diese Feststoff-Elektrolyt-Membran wird fest zwischen den Elektroden eingespannt. Somit besteht in Reinstwasser Anwendungen der Nachteil, dass die Strömung nicht sauber an die für die Ozon-Erzeugung chemisch aktive Anoden-Schicht herankommt, da die Elektroden selbst direkt mit dem Feststoff-Elektrolyten kontaktieren, und im Wege stehen. Dies verhindert eine saubere Entfernung des Reaktionsproduktes hier Ozon 03, und wirkt der Reaktion entgegen.

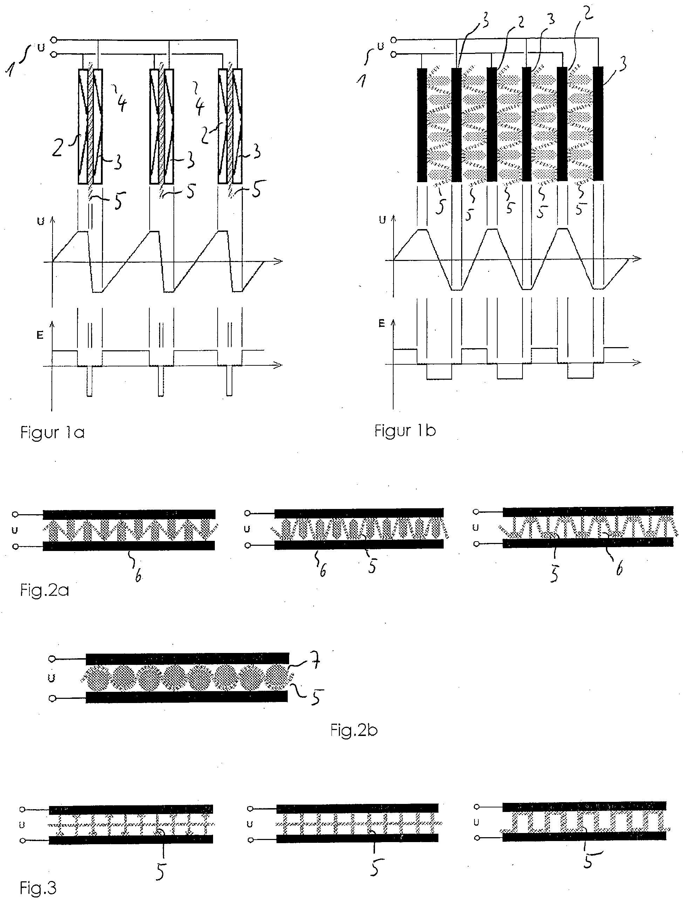

Zudem wirkt das elektrisch treibende Feld nur zwischen den Membranen, und somit ist der überwiegende Teil der Reaktionsausgangsprodukte, des Wassers, in dem schwächeren Bereich des elektrischen Feldes, welches aber durch den neutralen Plattenbereich vom starken elektrischen Feld im wirksamen der Membran zugeordneten Oberfläche getrennt ist. Dies zeigt die Figur 1 im linken Bereich.

Zudem ist die notwendige Fixierung der Elektroden, meist realisiert über eine Verschraubung, recht aufwändig, da diese paarweise erfolgt und Durchbrüche der Elektroden erfordert.

Bei Anwendungen im Schmutzwasserbereich werden die Elektroden mit Abstand fixiert.

Somit wirkt zwar das elektrische Feld ganz auf das Wasser, aber durch den recht großen Abstand wird der elektrochemische Prozess durch höhere Spannungen aktiviert und erhalten.

Der Nachteil hier ist eine notwendige Überwindung des durch den Elektrolyten gebildeten Zwischenraums zwischen den Elektroden, mit der notwendig werdenden höheren Spannung.

Auch hier ist die Fixierung der Elektroden sehr aufwendig.

Die JP 2003 096587 A offenbart eine Gaserzeugungsvorrichtung, bei der ein auf einer keilförmigen Unterlage angeordnetes Gehäuse mit einem Zellenstapel in Reinwasser eingetaucht, in einem Wasserstoff-Speichertank angeordnet ist. Das Gehäuse hat eine Eintrittsöffnung in seiner oberen Wand, durch die von einer Pumpe zugeführtes Reinwasser in das Gehäuse einströmt, und eine Austrittsöffnung für ein Wasser/Wasserstoff-Gemisch, wobei der Wasserstoff in dem Wasserstoff-Speichertank gespeichert wird. Außerdem strömt Sauerstoff aus einer Austrittsöffnung in der oberen Gehäusewand in eine Leitung und anschließend in einen Sauerstoff-Vorratsbehälter.

Die JP 2003 129266 A offenbart eine Gaserzeugungsvorrichtung, bei der ebenfalls Reinwasser durch eine Pumpe durch eine Wassereinlassöffnung in der oberen Gehäusewand an einer unteren Position eines schräg auf einer keilförmigen Unterlage angeordneten Gehäuses eingeführt wird, wobei das Reinwasser durch Bohrungen in sogenannten Separatoren nach unten strömt. In dem oberen Bereich des Zellenstapels sind Bohrungen in den Separatoren ausgebildet, durch die ein Sauerstoff/Wasser-Gemisch und ein Wasserstoff/Wasser-Gemisch durch Bohrungen austreten und durch Öffnungen in der oberen Wand des Gehäuses die Gaserzeugungsvorrichtung verlassen. Das Sauerstoff/Wasser-Gemisch fließt durch den Sauerstoff/Wasser-Ausgang in den Sauerstoff-Speichertank, während das Wasserstoff/Wasser-Gemisch durch eine Leitung 56 in einen Wasserstoff-Vorratstank fließt.

Die US 8 163 142 B1 offenbart ein Wasserstoffsystem für einen Verbrennungsmotor.

Der vorliegenden Erfindung liegt die Aufgabe zugrunde, ein Reinwasser-Versorgungssystem für Dialysegeräte anzugeben, bei dem Keime in dem durchfließenden Wasser wirkungsvoll abgetötet und organische Substanzen oxidiert werden.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Erfindungsgemäß wird ein Zellenaufbau vorgeschlagen, welcher den Feststoff-Elektrolyten so anordnet, dass dieser die flächigen Elektroden leitfähig verbindet aber gleichzeitig Strömungskanäle darstellt, und vollflächig den Anoden- und Kathoden-Raum von einander trennt. Dadurch wird das elektrische Feld bis zu den wirksamen Oberflächen aufrechterhalten, und bewirkt eine sehr hohe Effizienz.

Ein schematischer Aufbau ist in der Figur 1 dargestellt.

Vorzugsweise besteht das Trägermaterial der flächigen Elektroden aus Niob, welches mit einer Bor dotierten Diamantschicht überzogen ist.

Um Membranen mit hoher Ozonausbeute und gleichzeitig hoher Lebensdauer zu erhalten, hat sich fluorierte Polysulfonsäure (PFSA) als brauchbarer Membrangrundstoff herausgestellt.

Allerdings sind zur Erhöhung der Membranlebensdauer noch Zusatzstoffe wie z.B. Montmorillonit, und/oder auch Ceroxid und/oder auch Manganoxid pulverförmig mit einem Verhältnis von ca. 2%, dem vorzugsweise granulierten Membran Grundstoff PFSA beizumischen.

Montmorillonit verbessert u.a. die Wasseraufnahme innerhalb der Membran und reduziert dadurch das Konzentrationsgefälle, Ceroxid und Manganoxid erhöhen den Oxidationswiderstand der Membrane gegenüber Ozon.

Messungen haben gezeigt, dass sehr hohe Stromausbeuten möglich sind. Gleichzeitig wird eine sehr hohe Packungsdichte erreicht, was den erforderlichen Raum minimiert. Dies wird im Folgenden noch genauer veranschaulicht.

Der Aufbau ermöglicht eine einfache modulare Erweiterbarkeit, die eine hohe wirtschaftliche Flexibilität ermöglicht.

Der erfindungsgemäße Ozonerzeuger ist in eine Leitung eines Reinwasser-Versorgungssystems für Dialysegeräte eingeschaltet, um evtl. vorhandene Keime etc. in dem durchfließenden Wasser abzutöten bzw. organische Substanzen zu oxidieren. Der ebenfalls erzeugte Wasserstoff kann, falls die Löslichkeitsgrenze überschritten wird, dabei in einem Vorlaufbehälter oder dergleichen gegebenenfalls ausgasen.

Der erfindungsgemäße Aufbau ist durch eine Feststoff-Elektrolyt-Membran gestaltet, welche in Form von einer Sägezahn- Trapez- oder Rechteck-Funktion zwischen Anode und Kathode springt. Wobei die Formen selber bis zu einer Sinuskurve abgerundet werden können. Dabei können Gitter zum Einsatz kommen, auf welche die Membran aufgefädelt oder überzogen wird, oder welche der Membran die Form aufprägen.

### Siehe Figur 2a

Ebenso können unidirektionale Gewebe zum Einsatz kommen, welche der Membran die Form aufprägen.

### Siehe Figur 2b

Eine andere Möglichkeit ist die Darstellung einer Feststoff-Elektrolyt-Membran, welche kontaktierende Erhöhungen besitzt, die die Anode und Kathode berühren, und dabei klare Strömungskanäle bildet. Hier sind mannigfaltige optimierbare Formen denkbar, diese können sowohl noppenförmig als auch als Streben ausgebildet sein.

### Siehe Figur 3

Auch eine Quer-Anströmung mit durchbohrten Elektroden bei teilflächigem Elektrolyten wie in DE102004015680A1 vorgeschlagen, wäre denkbar, wobei die Strömung wenig förderlich ist, und die erfindungsgemäße vollflächige Membran-Trennung bei gleichzeitiger leitfähiger Verbindung verletzt.

Der erfindungsgemäße Zellenaufbau ermöglicht sowohl eine Stapelung, welche zwischen zwei spannungsbeaufschlagen Außen-Elektroden die aktive Fläche ohne weitere Kontaktierungen vervielfacht. Dabei muss die Spannung entsprechend multipliziert werden.

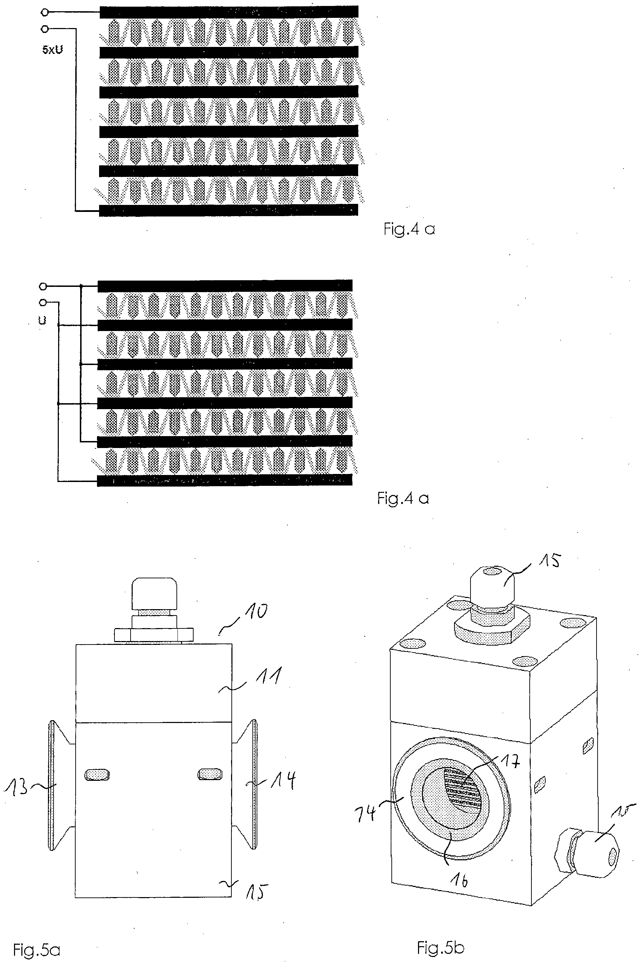

### Siehe Figur 4a

Auch eine Stapelung mit wechselseitiger Polung ist möglich.

### Siehe Figur 4b.

Dieser Stapel kann recht einfach in ein isolierendes Gehäuse, welches den Zufluss und Abfluss lenkt und die hydraulischen sowie elektrischen Anschlüsse bietet, integriert werden.

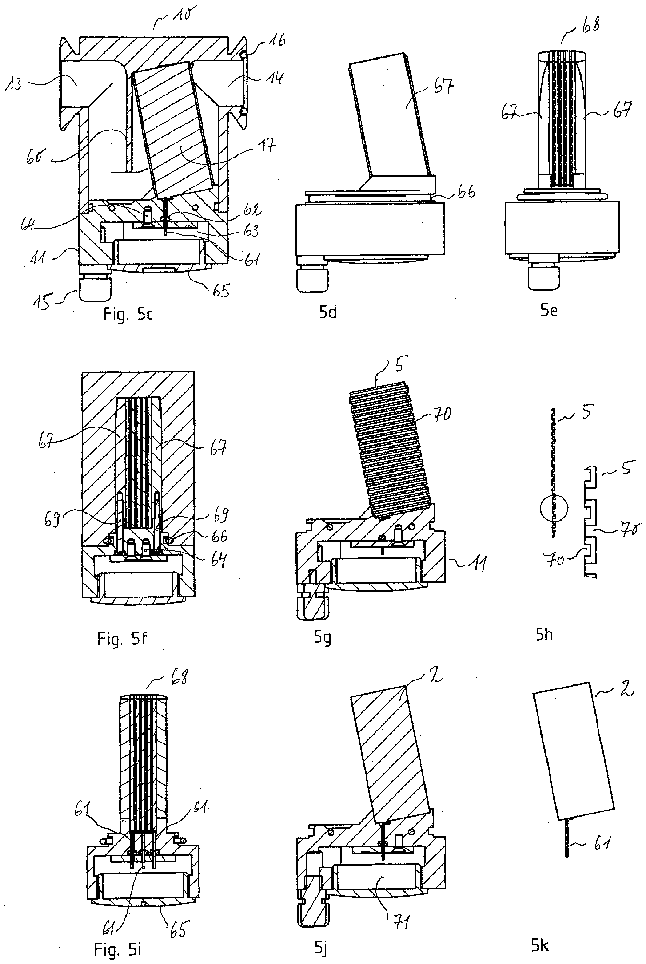

Siehe Figur 5, hier ist ein Block mit einer Clamp-Verbindung und ein möglicher Aufbau dargestellt.

Die Erfindung wird anhand folgender Zeichnungen erläutert. Es zeigen:
Fig.1a.u.1b.- Schema des Zellenaufbaus mit Spannungsverlauf und Potentialverlauf Fig. 1 a. Schema einer Ozonzelle nach dem Stand der Technik. Die angelegte Spannung 1 wirkt über die Elektrode 2 und die Gegenelektrode 3 auf das Medium, welches im Zwischenraum 4 vorbeiströmt. Die Elektrode 2 und Gegenelektrode 3 sind gegeneinander mit einer dazwischen liegenden Feststoff-Elektrolyt-Membran 5 verschraubt. Aussparungen oder auch Poren in den Elektroden ermöglichen einen Zu- und Abtransport der Ausgangsstoffe und der Reaktionsprodukte. Die Spannungsdifferenz wirkt jeweils zwischen den Platten über den jeweiligen Abstand, wodurch das entsprechende elektrische Feld auf die Ionen als treibende Kraft wirkt. Erkennbar ist, dass das treibende elektrische Feld eine Lücke im Plattenbereich erfährt.
   Die effektive Anodenfläche zur Ozonerzeugung ist drei mal vorhanden. Fig. 1 b. Schema einer erfindungsgemäß aufgebauten Ozonzelle. Die angelegte Spannung 1 wirkt über die Elektrode 2 und die Gegenelektrode 3 auf das Medium, welches im Zwischenraum 4 vorbeiströmt. Die Elektrode 2 und Gegenelektrode 3 sind gegeneinander mit der dazwischen gelagerten Feststoff-Elektrolyt-Membran 5 leitfähig verbunden. Strömungskanäle in der angeordneten Membran ermöglichen einen Zu- und Abtransport der Ausgangsstoffe und der Reaktionsprodukte. Die Spannungsdifferenz wirkt jeweils zwischen den Platten über den jeweiligen Abstand, wodurch das entsprechende elektrische Feld auf die Ionen als treibende Kraft wirkt. Diese treibende Kraft wirkt ohne Unterbrechung bis zu der aktiven Reaktionsebene. Die Reaktionsprodukte werden durch den direkt wirkenden Fluss reaktionsfördernd zu- und abtransportiert.
   Die hohe Packungsdichte ist hier gut erkennbar, dadurch dass bei gleicher Elektrodenzahl die effektiven Elektrodenfläche von 3 auf 5 erhöht ist.
Fig.2 und 3 - Schematischer Aufbau einer erfindungsgemäßen Einzelzelle mit Blick in Strömungsrichtung
Fig. 2a - mit Membran geprägt durch Zusatzgitter 6
Fig. 2b - mit Membran geprägt durch Gewebeeinlagen 7
Fig. 3 - mit Membran welche in sich als ausgeprägtes Profil 5 gestaltet ist.
Fig. 4 - Zellenstapel Ansicht in Flussrichtung
Fig 4a - Zellenstapel mit einer Kontaktierung nur der äußeren Elektroden. Die mittleren Elektroden nehmen entsprechend einer Serienanordnung zwischengeordnete Potentiale ein. Der Strom fließt durch alle Zellen und die Spannungen addieren sich zur Gesamtspannung.
Fig 4b - Zellenstapel mit durchgängiger wechselnder Kontaktierung, entsprechend einer Parallelschaltung mit gleicher Spannung an allen Zellen und Aufsummierung des Stroms.
Fig 5a - Erfindungsgemäßer Ozon-Generator 10 mit Zellenstapel in Seitenansicht, bestehend aus Blockdeckel 11, Blockunterteil 12, Eingangs-Clamp 13, und Ausgangs-Clamp 14. Anstatt der Clamp-Verbindung kann auch der Block mit einer Flanschverbindung, Steckverbindung, Verbindung mit Überwurfmutter, Gewindeverbindung oder anderen Verbindungsarten versehen sein.
Fig. 5b - Der Generator mit der Ansicht von schräg oben. Zu sehen ist der Ausgangs-Clamp 14 mit erkennbarem O-Ring-Sitz 16, die spritzwasser- geschützten Kabelverschraubungen 15, und der Zellenstapel 17.
Figur 5c zeigt einen Schnitt durch einen Ozongenerator mit schräg liegenden Zellenstapel 17. Dabei wird die Flüssigkeit über die Flüssigkeitsumkehrung 60 so durch die Strömungskanäle 70 der Membran 5 geführt, dass es zu keine Gasbildung, insbesondere Wasserstoffbildung, innerhalb des Ozongenerators 10 kommt. Der Zellenstapel wird durch die Generatorspannplatten 67 formschlüssig zusammengepresst, so dass innige Verbindungen zwischen Elektroden 2 und Membranen 5 entstehen. Zur Reduzierung des Flusswiderstandes im Ozongenerator 10, können die Generatorspannplatten 67 mit hier nicht dargestellten seitlichen, dem Zellenstapel entgegengesetzten Flüssigkeitskanälen ausgeführt werden.

Die Elektroden Stromführung erfolgt über den Anschluss 61, der vorzugsweise als Rundmaterial ausgeführt- und leitend an der Stirnseite der Elektrode 2 angebracht ist.

Zu Flüssigkeitsabdichtung der Elektrodenanschlüsse 61 wird eine Dichtung 62 mit der Dichtungsdruckplatte 63 und den Druckplattenschrauben 64 verwendet.

Figur 5f zeigt die Lage und die Befestigung der Generatorspannplatten 67 mittels Spannplattenschrauben 69. Dabei ist auch der formschlüssige Einbau der Spannplatten im Ozongenerator zu sehen.

5 g zeigt die schräg nach oben laufenden Strömungskanäle 70 der Membranen 5, deren Struktur in Figur 5h dargestellt ist.

Figur 5i zeigt den montierten Zellenstapel 68 dessen Elektrodenanschlüsse 61 in den Verdrahtungsraum 71 hineinragen. Der Verschluss erfolgt mit dem Deckel 65.

5j und 5k zeigen den montierten Zellenstapel 68 seitlich bzw. eine Elektrode 2 mit Anschluss 61.

Es liegt im Sinne der Erfindung den Neigungswinkel des Stapels oder die Anschlüsse der Elektroden auch in andere Dichtungsweise auszuführen. Ebenso ist eine andere hydraulische Anschlussform als die hier dargestellte Clampverbindung z.B. mit allen zu Verfügung stehenden hydraulischen Anschlusstechniken möglich.

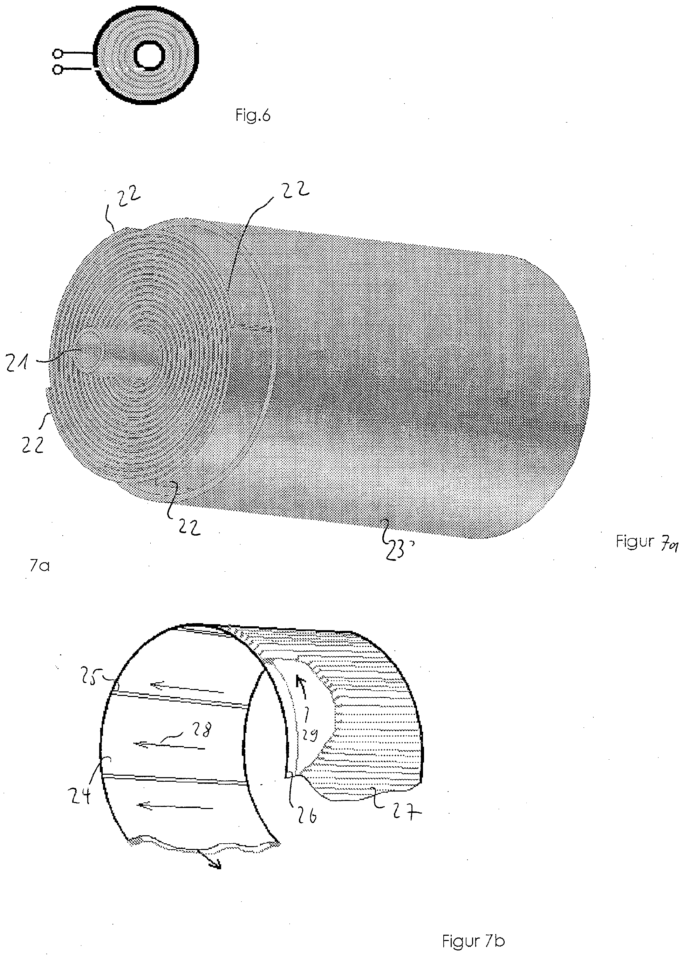

Fig. 6 - schematisches Wickelmodul mit einer Wickeltasche

Fig. 7a - Wickelmodul geöffnet mit 4 Taschen. Innenrohr 21, Wasserstoffsammeltaschen 22, Außenrohr 23.

Fig. 7b - erfindungsgemäße Wickelmodul-Tasche aufgeschnitten. Erkennbar sind die leitfähigen Anoden-Segmente 24, welche dicht aber mit Abstand und somit isolierend gegeneinander verklebt sind 25. Diese sind auch am Rand 26 gegen die Feststoff-Elektrolyt-Membran 27 dicht verklebt. Die Feststoff-Elektrolyt-Membran 27 hat erkennbar Strömungsprofile, welche einen Fluss in Strömungsrichtung 28 ermöglichen und trotzdem eine leitfähige Verbindung zur nächsten Wickelebene haben, somit auf die Taschen-Außenseiten der Anoden-Segmente 24.

Innerhalb der Taschen ist eine leitfähige Verbindung auf die als Kathode wirkende Seite 29 der Anoden-Segmente über ein leitfähiges Vlies oder tangential verlaufende Profile hergestellt, welches gleichzeitig einen Abfluss des Wasserstoffs sicherstellt.

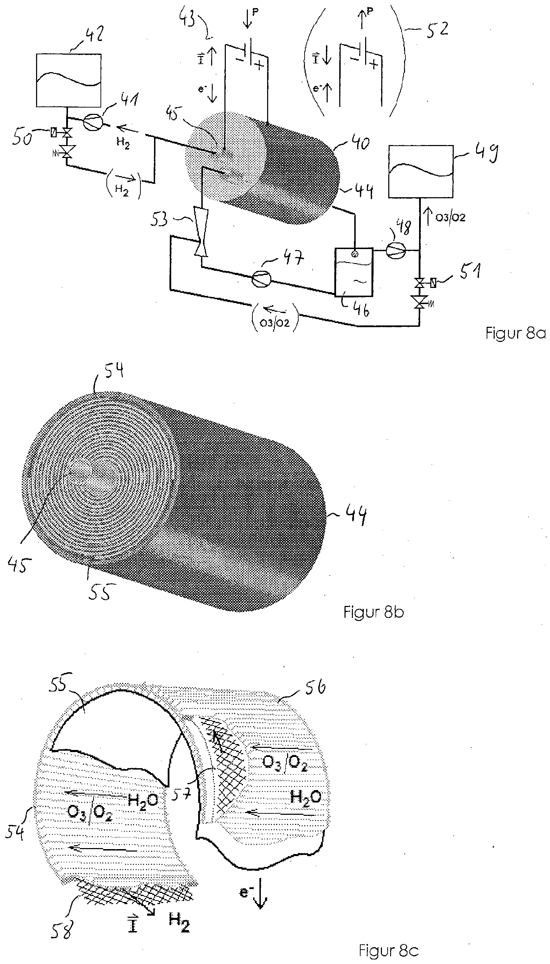

### Fig. 8 - H2-02/03 - Zellen / Generator Aufbau

### Fig. 8a - Blockschaltbild-Skizze

Im Bild dargestellt ist der Generatorbetrieb, und in Klammern angegeben der Brennstoff-Zellen-Betrieb. Im Generatorbetrieb wird aus dem erfindungsgemäßen Zellenwickel 40 Wasserstoff mit einer Pumpe 41 in den Wasserstofftank 42 gepumpt. Dabei fließt durch die angelegte äußere Spannung Strom 43 vom äußeren Mantelrohr 44 zum inneren Sammelrohr 45. Gleichzeitig wird Reinwasser aus dem Reinwassertank 46 über die Reinwasserpumpe 47 durch das Zellenwickel 40 gepumpt. Im Reinwassertank scheidet sich der Sauerstoff bzw. das Ozon als Gasphase ab, und wird mit einer Pumpe 48 in den Sauerstoff/Ozon-Tank 49 gepumpt. Ein Gasfreigabeventil mit nachgeschaltetem Druckminderer sowohl für den Wasserstoff 50 , als auch den Sauerstoff 51 ist geschlossen.

Eine Reinwasser-Füllstands-Überwachung signalisiert die obere Energie-Speichergrenze.

Im Brennstoff-Zellen-Betrieb 52 schalten die Gasfreigabeventile 50 und 51 den Gastransport über die Druckminderer frei. Sauerstoff/Ozon wird über ein Venturirohr 53 zerstäubt dem Reinwasserfluss zugeführt.

Fig. 8b - Wickelmodul mit durchgängigen kontaktierten Elektroden geöffnet. Erkennbar sind die 4 Taschen 54, welche außen enden und die zum Außenrohr kontaktierten Anoden 55 zwischen sich einschichten.

Fig. 8c - Wickelmodul-Tasche aufgeschnitten. Die Wickelmodultasche 54 besteht aus zwei Feststoff-Elektrolyt-Ebenenen, welche zur Taschen-Außenseite Strömungsprofile 56 besitzen und am Rand 57 außen dicht miteinander verklebt sind, oder aus einem gerippten Schlauch gefaltet sind. In den Taschen bietet die Kathode 58 eine Gasströmungsebene und die leitende Verbindung zum inneren Sammelrohr 45. Die Kathode kann aus Drahtgitter oder leitendem KunststoffGewebe oder Kunststoff-Vlies bestehen.

## Patentansprüche

1. Reinwasser-Versorgungssystem für Dialysegeräte, mit einer Leitung, in die ein elektrochemischer Ozonerzeuger eingeschaltet ist, um Keime in dem durchfließenden Wasser abzutöten bzw. organische Substanzen zu oxidieren, wobei der Ozonerzeuger einen Block (10) aufweist, der einen Eingang (13) und einen gegenüber liegenden Ausgang (14) für das Wasser und dazwischen einen Zellenstapel (17) enthält, der aus mehreren Zellen besteht, die jeweils eine flächige Anode (2), eine flächige Kathode (3) und eine dazwischen angeordnete vollflächige, Kationen-leitende, chemisch gegen Ozon stabile Membran (5) als Feststoff-Elektrolyt aufweist, die Sägezahn-, Trapez-, Rechteck- oder Sinus-förmig die Anode (2) und die Kathode (3) verbindet und dabei Strömungskanäle (70) für Wasser bildet, die als Anoden- und Kathodenräume voneinander getrennt sind,
wobei der Zellenstapel (17) schräg liegend in dem Block (10) zwischen dem Eingang (13) und dem Ausgang (14) angeordnet ist, so dass die Strömungskanäle (70) schräg nach oben verlaufen und
wobei in Fließrichtung vor dem Zellenstapel eine Flüssigkeitsumkehrung (60) angeordnet ist, die das Wasser durch die Strömungskanäle (70) der Membran (5) führt.

2. Reinwasser-Versorgungssystem nach Anspruch 1,
**dadurch gekennzeichnet,**
**dass** die Form des Verlaufs der Membran (5) durch einen Träger, vorzugsweise ein Gitter (6) oder ein unidirektionales Gewebe (7), bei dem sich Kettfaden und Schussfaden sehr stark in der Dicke unterscheiden, hervorgerufen wird, auf das die Membran (5) aufgebracht ist.

3. Reinwasser-Versorgungssystem nach Anspruch 1,
**dadurch gekennzeichnet,**
**dass** die Membran selbsttragend geformt ist.

## Claims

1. A pure water supply system for dialysis devices with a conduit, connected into which is an electrochemical ozone generator in order to kill germs in the flowing water or to oxidise organic substances, wherein the ozone generator includes a block (10), which includes an inlet (13) and an opposing outlet (14) for the water and a cell stack (17) between them which consists of a plurality of cells, which each include a laminar anode (2), a laminar cathode (3) and a continuous, cation-conductive membrane (5) in the form of a solid electrolyte, which is arranged between them and is chemically stable with respect to ozone and which connects the anode (2) and the cathode (3) in a saw tooth, trapezoidal, rectangular or sinusoidal shaped manner and thus defines flow passages (70) for water, which are separated from one another as anode and cathode spaces, wherein the cell stack (17) is arranged lying obliquely within the block (10) between the inlet (13) and the outlet (14) so that the flow passages (70) extend obliquely upwardly and wherein arranged upstream of the cell stack in the flow direction there is a liquid reverser (60) which guides the water through the flow passages (70) of the membrane (5).

2. A pure water supply system as claimed in Claim 1, **characterised in that** the shape of the profile of the membrane (5) is caused by a carrier, preferably a grid (6) or a unidirectional fabric (7), in which the warp threads and weft threads differ very greatly in their thickness, on to which the membrane (5) is applied.

3. A pure water supply system as claimed in Claim 1, **characterised in that** the membrane is shaped to be self-supporting.

## Revendications

1. Système d'alimentation en eau pure pour des appareils de dialyse, comprenant un conduit, dans lequel est monté un générateur d'ozone électrochimique afin de tuer des germes dans l'eau en circulation ou d'oxyder des substances organiques, dans lequel le générateur d'ozone présente un bloc (10), qui contient une entrée (13) et une sortie (14) opposée pour l'eau, et, de manière intercalée, une pile de cellules (17), qui est constituée par plusieurs cellules, qui présentent respectivement une anode (2) plane, une cathode (3) plane et une membrane (5) pleine disposée de manière intercalée, conductrice de cations, stable chimiquement par rapport à l'ozone se présentant sous la forme d'un électrolyte de matière solide, qui relie l'anode (2) et la cathode (3) de manière à présenter une forme en dent de scie, une forme de trapèze, une forme de rectangle ou une forme de sinus et qui forme ce faisant des canaux d'écoulement (70) pour l'eau, qui sont séparés les uns des autres sous la forme d'espaces anodique et cathodique,
dans lequel la pile de cellules (17) est disposée, tout en étant à l'oblique, dans le bloc (10) entre l'entrée (13) et la sortie (14) de sorte que les canaux d'écoulement (70) s'étendent vers le haut à l'oblique, et
dans lequel un système d'inversement de liquide (60) est disposé dans le sens de circulation avant la pile de cellules, lequel achemine l'eau à travers les canaux d'écoulement (70) de la membrane (5).

2. Système d'alimentation en eau pure selon la revendication 1,
**caractérisé en ce**
**que** la forme du profil de la membrane (5) est provoquée par un support, de préférence une grille (6) ou un tissu (7) unidirectionnel, dans lequel les fils de chaîne et les fils de trame se distinguent de manière très marquée par l'épaisseur, sur lequel tissu la membrane (5) est appliquée.

3. Système d'alimentation en eau pure selon la revendication 1,
**caractérisé en ce**
**que** la membrane est formée de manière à être autoportante.
